# EUROPEAN PATENT SPECIFICATION

(11) **EP 4 589 364 B1**
(45) Date of publication and mention of the grant of the patent: **26.08.2026**
(21) Application number: 25152070.6
(22) Date of filing: 15.01.2025
(51) Int. Cl.: G02B 27/01

(54) **PIVOTING HEAD UP DISPLAY APPARATUS**
SCHWENKBARE HEAD-UP-ANZEIGEVORRICHTUNG
APPAREIL D'AFFICHAGE TÊTE HAUTE PIVOTANT

(30) Priority: 21.01.2024 US 202463623303 P
(43) Date of publication of application: 23.07.2025
(73) Proprietor: Wilcox Industries Corp., Newington, NH 03801 (US)
(72) Inventor: LEMIRE, Gary M., Newington, NH 03801 (US)
(74) Representative: FRKelly

(56) References cited:
- WO-A2-2024/186957
- US-A1- 2015 323 779
- US-A1- 2022 167 703

## Description

### CROSS REFERENCE TO RELATED APPLICATION

This application claims the priority benefit of U.S. provisional application no. 63/623,303 filed January 21, 2024.

### BACKGROUND

The present development relates to a head up display apparatus for mounting on a helmet which is pivotable out of the user's line of sight when not in use. A head up display apparatus comprising a single-axis pivot mechanism is known from US 2015/323779 A1. A pivot mechanism with dual-axis rotation for adjusting viewing units of a night vision apparatus is known from US 2022/167703 A1.

In preferred embodiments, the head up display apparatus herein is configured for use in daylight conditions. In preferred embodiments, a pivot mechanism with dual-axis rotation is provided. In preferred embodiments, the pivot mechanism is intended to allow one-handed operation to move the head up display (HUD) between a deployed position when in use and a stowed position when not in use. This one-handed operation is advantageous in military scenarios in that it allows a soldier to reposition the HUD as necessary with one hand while maintaining control of his or her weapon with the other hand.

### SUMMARY

In one aspect, a head up display apparatus includes a powered bridge assembly configured for detachable coupling to a helmet mount assembly. A bridge pivot arm assembly is pivotably attached to the powered bridge assembly and has a bridge pivot arm configured to pivot in relation to the powered bridge assembly about a first pivot axis which extends in a direction which is generally horizontal and generally parallel to a line of sight of a user. A head up display (HUD) assembly is attached to the bridge pivot arm assembly and comprises a HUD pivot arm having a HUD disposed at a distal end of the HUD pivot arm and a HUD pivot assembly disposed at a proximal end of the HUD pivot arm. The HUD pivot arm is configured to pivot in relation to the bridge pivot arm about a second pivot axis, the second pivot axis extending in a generally vertical direction. Pivoting movement of the bridge pivot arm in relation to the powered bridge assembly causes the HUD to move between a lowered position and a raised position along an arcuate path in a generally vertical plane. When the bridge pivot arm is in the lowered position, pivoting movement of the HUD pivot arm in relation to the bridge pivot arm causes the HUD to move between a viewing position and a laterally displaced position along an arcuate path in a generally horizontal plane.

In a more limited aspect, pivoting movement of the bridge pivot arm in relation to the powered bridge assembly and pivoting movement of the HUD pivot arm in relation to the bridge pivot arm are configured for one-handed operation thereby allowing the user to pivot the HUD between the lowered position and the raised position and between the viewing position and the laterally displaced position using one hand.

In another more limited aspect, the powered bridge assembly includes a base receiving a first plurality of electrical contacts configured to electrically engage aligned contacts on the helmet mounting assembly and a power and data circuit board, the base pivotally coupled to the bridge pivot arm, the base and bridge pivot arm cooperating to define a pivot j oint. A detent mechanism includes one or more spring elements engaging one or more detent members, the one or more detent members configured to resiliently engage one or more complementary openings formed on a facing surface of the pivot joint when the bridge pivot arm is in the lowered position. The detent mechanism is configured to provide a force to overcome mechanism for securing the bridge pivot arm in the lowered position and for allowing the pivot arm to be pivoted to the raised position responsive to application of a sufficient force.

In another more limited aspect, the head up display apparatus further includes one or more tensioning washers disposed at the pivot joint to control friction and resistance during pivoting movement of the bridge pivot arm.

In another more limited aspect, the HUD assembly includes a data and power cable comprising a plurality of conductors and an HUD electrical connector configured to electrically engage a bridge electrical connector disposed on the power and data circuit board.

In another more limited aspect, the HUD assembly includes a first sliding connector disposed on the bridge pivot arm and a second sliding connector complementary with the first sliding connector, the first and second sliding connectors configured to detachably couple the HUD assembly to the bridge pivot arm.

In another more limited aspect, the first sliding connector comprises a generally T-shaped projection and the second sliding connector comprises a generally T-shaped channel.

In another more limited aspect, the generally T-shaped projection includes a gap and the first sliding connector includes a spring-biased slide lock disposed in the gap, the slide lock engaging with the T-shaped channel to selectively lock the HUD assembly in place on the bridge pivot arm.

In another more limited aspect, wherein the HUD pivot arm is pivotable with respect to the second sliding connector about the second pivot axis.

In another more limited aspect, the head up display apparatus further includes a pivot plate secured to an upward facing surface of the proximal end of the HUD pivot arm. A pivot threaded retainer is disposed intermediate the pivot plate and the upward facing surface of the proximal end of the HUD pivot arm. A recess is formed in a housing shell of the HUD assembly receiving the pivot threaded retainer. A pivot lock screw passes through a clearance opening in the second sliding connector, a central opening in the pivot plate the opening, and threadably engages the pivot threaded retainer.

In another more limited aspect, the head up display apparatus further includes a pivot stop pin is secured to a lower surface of the second sliding connector and running in an arcuate groove formed in an upper surface of the pivot plate, thereby limiting the degree of rotation of the HUD pivot arm with respect to the bridge pivot arm.

In another more limited aspect, the HUD assembly includes an external data and power connector configured to transfer external video data to the HUD assembly.

In another more limited aspect, the HUD assembly further includes video processing electronics configured to receive an input signal representative of video information and a human viewable display.

In another more limited aspect, the video processing electronics include one or more video signal processing components selected from the group consisting of image enhancement, graphic overlay, text overlay, video signal formatting, digital-to-analog conversion (DAC) circuitry, and display driver circuitry.

In another more limited aspect, the human viewable display is selected from the group consisting of a light emitting diode (LED) display, an organic light emitting diode (OLED) display, an active matrix organic light-emitting diode (AMOLED) display, a liquid crystal display (LCD), a digital light processing (DLP) display, and a micro-electro-mechanical systems (MEMS) display.

In another more limited aspect, the head up display apparatus further includes a heat sink in thermal communication with the human viewable display.

In another more limited aspect, the head up display apparatus further includes a beam splitter, a combiner lens, and a field lens positioned adjacent the human viewable display and configured to focus an image output from the display onto a beam splitter. The human viewable display and field lens lie in generally parallel planes which are inclined about 45 degrees with respect to a plane of the beam splitter and about 90 degrees with respect to a plane of the combiner lens.

In another more limited aspect, the head up display apparatus further includes a resilient focusing gasket disposed intermediate the human viewable display and the field lens. The focusing gasket is formed of a resilient material wherein a degree of compression of the focusing gasket is adjustable to change a distance between the field lens and the human viewable display.

In another more limited aspect, the human viewable display is configured to project an image towards the beam splitter through the field lens and the beam splitter is configured to reflect a portion of rays from the human viewable display towards the combiner lens. The combiner lens is configured to reflect the portion of rays received from the beam splitter along an optical path toward an eye of the user to project the image from the human viewable display onto the user's field of view. The combiner lens and beam splitter are further configured to allow unaltered rays from the user's external environment to pass therethrough, whereby the image from the human viewable display is superimposed on a natural view of the user through the HUD assembly.

In another more limited aspect, the head up display apparatus further includes a projection extending from the HUD assembly and forming a hood configured to block unwanted reflections off the beamsplitter from at least one direction.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is a first partial isometric view of a helmet having a helmet mounting system and a pivoting head up display (HUD) apparatus in accordance with an exemplary embodiment of the present invention.
FIG. 2 is a second partial isometric view of the helmet with helmet mounting system and pivoting HUD apparatus as shown in FIG. 1, with an optional external data transfer cable.
FIG. 3 is a first bottom view of the pivoting HUD pivot apparatus attached to a helmet mount assembly (HMA), with the HUD pivot arm in the operable, viewing position.
FIG. 4 is a second bottom view of the pivoting HUD pivot apparatus and HMA as shown in FIG. 3, with the HUD pivot arm pivoted out of the user's line of sight about a vertical pivot axis to allow the device to flip into the stowed position without interfering with the helmet brim.
FIG. 5 is a third partial isometric view of the helmet with helmet mounting system and pivoting HUD apparatus as shown in FIG. 1, with the HUD pivot arm pivoted out of the user's line of sight about the vertical pivot axis to allow the device to flip into the stowed position without interfering with the helmet brim, as shown in FIG. 4.
FIG. 6 is a fourth partial isometric view of the helmet with helmet mounting system and pivoting HUD apparatus as shown in FIG. 1, with the HUD assembly pivoted about a longitudinal pivot axis to a flipped up or stowed position.
FIG. 7 is an enlarged isometric view of power bridge base.
FIG. 8 is an exploded isometric view of the pivoting HUD apparatus appearing in FIG. 1.
FIG. 9 is an enlarged isometric view of the pivoting HUD apparatus pivot arm.
FIG. 10 is an exploded isometric view of the pivoting HUD apparatus pivot arm appearing in FIG. 9.
FIG. 11 is an isometric view of the powered bridge assembly coupled to an alternative embodiment pivoting HUD assembly.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope as defined in the appended claims. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

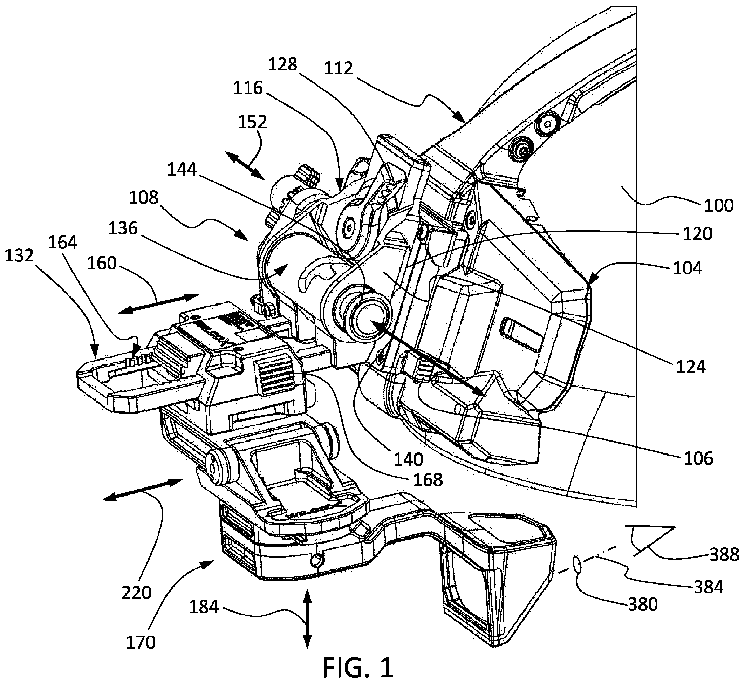

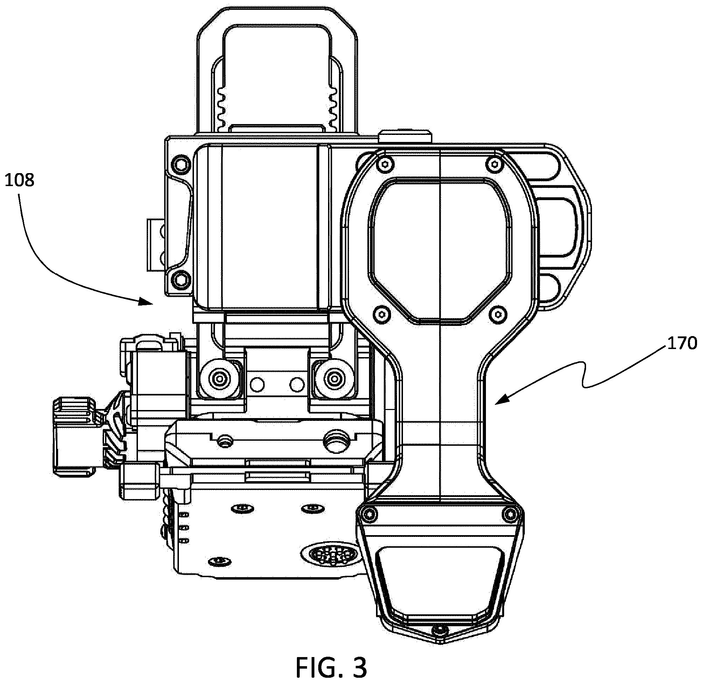

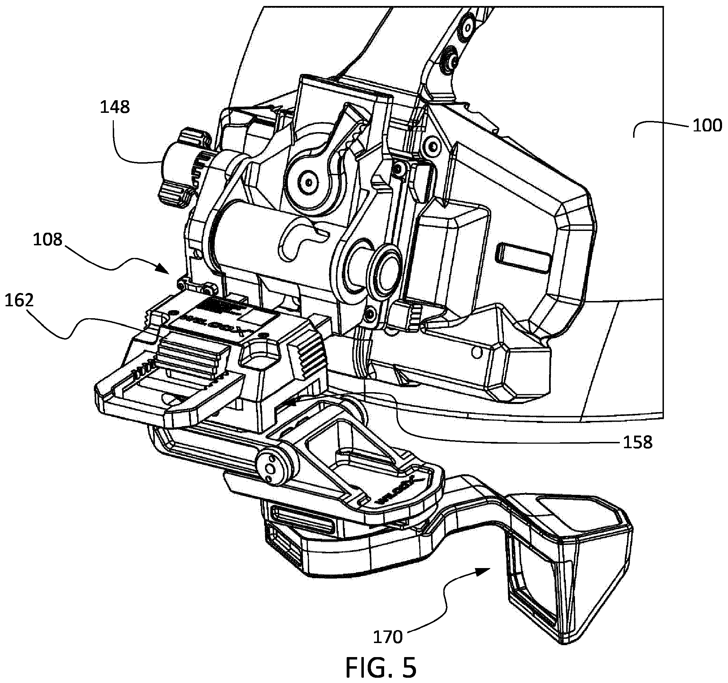

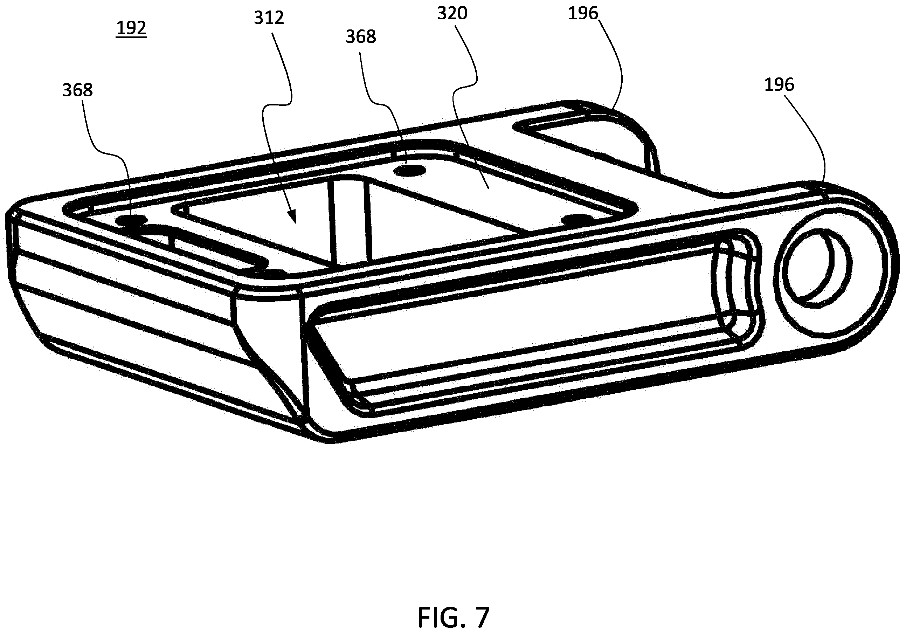

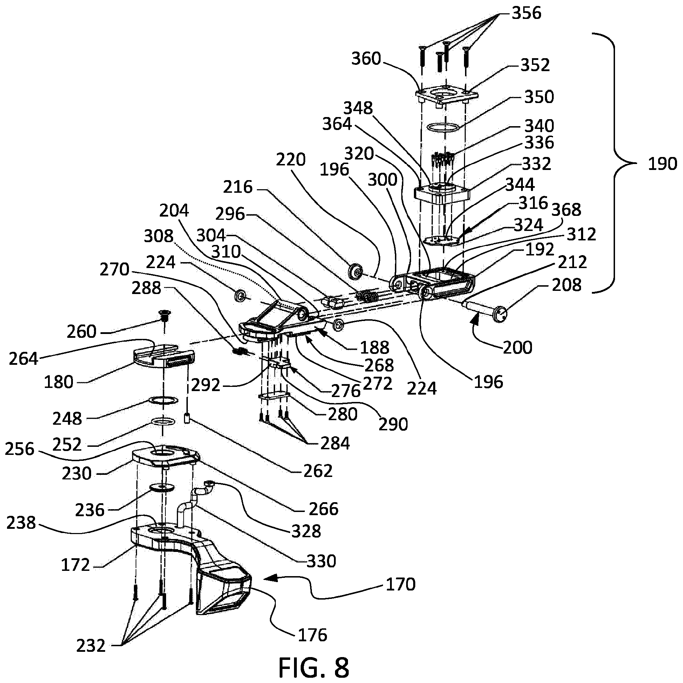

Referring now to the drawing FIGS. 1-10, wherein like reference numerals refer to like or analogous components throughout the several views, there is shown a helmet **100** having a front mounting shroud **104** attached thereto. A helmet mount assembly (HMA) **108,** in turn, is detachably coupled to the shroud **104.** A push button or slider **106** is provided to selectively detach the HMA **108** from the shroud **104.** The helmet **100** may be a military helmet, ballistic helmet, field helmet, tactical helmet, combat helmet, aviation helmet, among others. In embodiments, the front shroud **104** is a component of or interfaced with a helmet accessory mount platform **112,** such as shown and described in commonly owned U.S. patent application no. 18/500,657 filed November 2, 2023, and U.S. provisional patent application no. 63/427,496 filed November 23, 2022. In embodiments, the helmet accessory mount platform **112** is a WILCOX^{®} Universal Helmet Mount Assembly (UHMA). In embodiments, the HMA **108** is a mount in the WILCOX^{®} G24 product line. In embodiments, the HMA **108** is a WILCOX^{®} G24Xe HMA.

In embodiments, the HMA **108** includes a generally vertical pivoting portion **116** which includes a mounting or interface portion **120** that is detachably coupled to a complementary interface on the should **104.** The vertical pivoting portion **116** also includes a sliding portion **124,** which is selectively slidable in the vertical direction in relation to the mounting portion **120** and can be affixed at a desired position to provide a height adjustment feature of the HMA **108.** In the illustrated embodiment, a pivoting lever **128** is provided to selectively lock and unlock sliding movement of the sliding portion **124.** The mounting portion **124** includes a power and data interface **122** for transmitting power and data signals from the helmet accessory mount platform **112** to the HMA **108.**

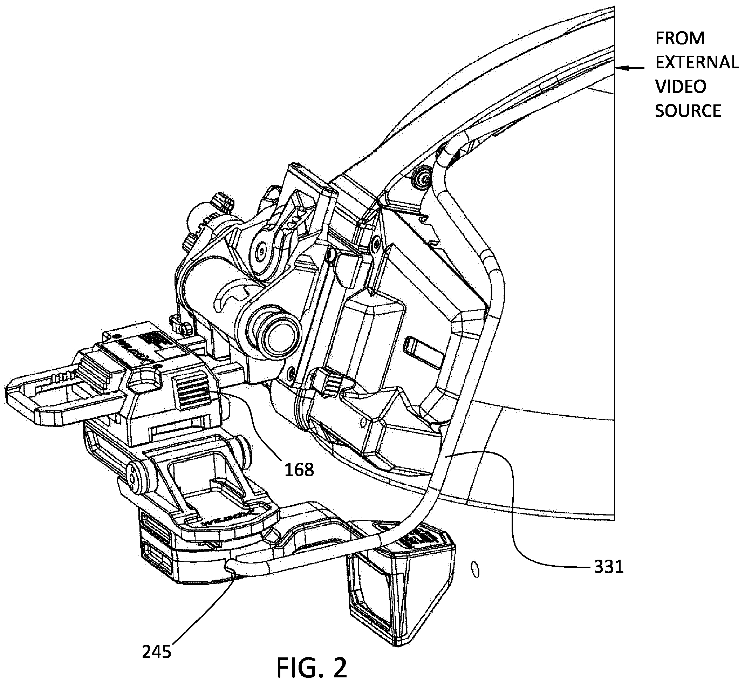

The sliding portion **124,** in turn, is pivotably attached to a carriage arm **132** via barrel pivot assembly **136.** The carriage arm **132** pivots about a generally horizontal transverse pivot axis **140.** The barrel pivot assembly **136** includes a push button **144** to allow the carriage arm **132** to be selectively pivoted between a deployed position as shown in FIGS. 1 and 2 and an upward pointing stowed position (not shown). A manually rotatable tilt adjust knob **148** includes a rotating disk (not shown) with an off-center or eccentric axis, transverse and generally horizontal axis of rotation **152,** which allows the user to fine tune the tile axis of the carriage arm **132.**

The carriage arm **132** carries a sliding carriage **156.** The sliding carriage **156** is selectively movable along a generally horizontal fore-and-aft axis **160,** which will be referred to herein as a longitudinal direction. Axes which extend parallel to the horizontal fore-and-aft direction **160** will be referred to herein as longitudinal axes. The sliding carriage **156** has a hot shoe receptacle interface **158** which is configured to detachably couple to a powered bridge assembly **190** which defines a hot shoe compatible with the hot shoe receptacle interface **158.** The powered bridge assembly **190** is configured to receive a head up display (HUD) assembly **170.** In embodiments, a spring-loaded push button **162** is provided on the sliding carriage **156** to allow the HUD assembly **170** to disengage from the sliding carriage **156.**

The sliding carriage **156** is slidable along the arm **132** and can be positioned at a desired axial position there along to provide a desired eye relief. In embodiments, a spring-loaded locking tooth or pin (not shown) within the carriage **156** is biased into engagement with a gear rack **164** to prevent the carriage **156** from sliding. When it is desired to slide the carriage, e.g., to adjust the eye relief, a button **168** is pressed which overcomes the force of the biasing spring and moves the tooth or pin out of engagement with the gear rack **164.** The carriage **156** can then slide to the desired position. The button **168** is then released and the bias of the spring again urges the tooth or pin into engagement with the gear rack **164** to lock the carriage **156** into the desired position.

The HUD apparatus herein includes a HUD assembly **170.** The HUD assembly **170** has a proximal end **172** and a distal end **176.** The proximal end **172** is pivotally coupled to an "X" plane slide lock member **180.** The proximal end **172** of the HUD assembly **170** pivots in relation to the "X" plane slide lock member **180** about a vertical pivot axis **184.**

The "X" plane slide lock member **180** is coupled to a pivot arm **188.** The pivot arm **188,** in turn, is pivotally coupled to the powered bridge assembly **190.** The powered bridge assembly **190** includes a base **192** having opposing pivot rings **196.** A pivot pin **200** passes through the opposing rings **196** and through a bore in a hinge knuckle **204** on the pivot arm **188.** The pivot pin **200** has an enlarged diameter head **208** at one end and a threaded opposite end **212** which threadably engages a threaded pivot end cap **216.**

The pivot pin **200** defines a generally horizontal, longitudinal pivot axis **220.** A first tensioning washer **224** is disposed intermediate the enlarged diameter head **208** and one of the pivot rings **196.** A second tensioning washer **224** is disposed intermediate the pivot end cap **216** and the other one of the pivot rings **196.** Tightening or loosening the threaded end cap **216** compresses or releases the tensioning washers **224** to achieve a desired amount pressure or friction applied to the hinge pin and thus control the friction or resistance in pivoting movement between the pivot arm **188** and the bridge base **192.**

A side pivot plate **230** is secured to the upward facing surface of the proximal end **172** of the HUD assembly **170** via threaded fasteners **232.** A side pivot threaded retainer **236** is disposed intermediate the side pivot plate **230** and the upward facing surface of the proximal end **172** of the HUD assembly **170.** A recess or cavity **238** is formed in a housing shell **240** of the HUD assembly **170** and is provided to allow the side pivot threaded retainer **236** sit flush with the upper surface of the proximal end **172** of the HUD assembly **170.**

A wear/slip washer **248** and a drag O-ring **252** are coaxially disposed about a central opening **256** in the side pivot plate **230** and the "X" plane slide lock member **180.** The opening **256** may have a counterbore or bevel for receiving the wear/slip washer **248** and a drag O-ring **252.** A side pivot lock screw **260** passes through a clearance opening in the "X" plane slide lock member **180,** the opening **256,** and threadably engages the side pivot threaded retainer **236.** A side pivot stop pin **262** is secured to the lower surface of the "X" plane slide lock member **180** and runs in an arcuate groove **266** on the upper surface of the side pivot plate **230,** which limits the degree of rotation of the HUD assembly **170.** In embodiments, the arc of the groove **266** subtends an angle of about 30 degrees, although other angles are contemplated.

The upward facing surface of the "X" plane slide lock member 180 has a channel **264** with a generally T-shaped cross sectional shape which slidably and detachably receives an elongate rail **268** with a complementary generally T-shaped cross sectional shape. Other interlocking cross sectional shapes for the channel **264** and the rail **268** are contemplated, such as a dovetail shape and others.

The elongate rail **268** is segmented into a proximal segment **270** and a distal segment **272.** A slide lock member **276** is captured within a gap or notch between the rail segments **270** and **272** and retained therein by a slide lock cover plate **280.** The slide lock cover plate **280** is secured by a plurality (e.g., 4) of threaded fasteners **284** which pass through clearance openings in the plate **280** and threadably engage tapped openings (not shown) in the lower surface of the pivot arm **188.** One or more captured spring elements **288** bear against the slide lock member **276,** urging it in a transverse direction in relation to the long axis or axial direction of the elongate rail **268.** In embodiments, the slide lock member **276** has a protruding actuator portion **290** and a main body portion **292.**

In operation, the HUD assembly **170** is assembled to the pivot arm **188** by sliding the "X" plane slide lock member **180** onto the elongate rail **268** past the first segment **270,** past the slide lock member **268,** and onto the second segment **272.** When the "X" plane slide lock member **180** is completely past the slide lock member **268,** the one or more spring elements **288** urge the main body **292** of the slide lock member **276** out of alignment with the elongate rail **268,** thereby serving as a stop to prevent sliding removal of the "X" plane slide lock member **180** from the pivot arm **188.** When it is desired to remove the HUD assembly **170** from the pivot arm **188,** the actuator portion **290** is manually depressed to compress the one or more spring elements **288** and move the main body **292** of the slide lock member **276** back into the alignment with the elongate rail **268** to allow sliding removal of the "X" plane slide lock member **180** from the pivot arm **188.** In embodiments, the main body **292** has a rounded, beveled, curved, or ramped leading edge to allow sliding movement of the "X" plane slide lock member **180** is completely past the slide lock member **276** during sliding attachment, and a flat or squared off trailing edge to prevent removal in the reverse direction unless the slide lock member **276** is first manually pressed in by the user.

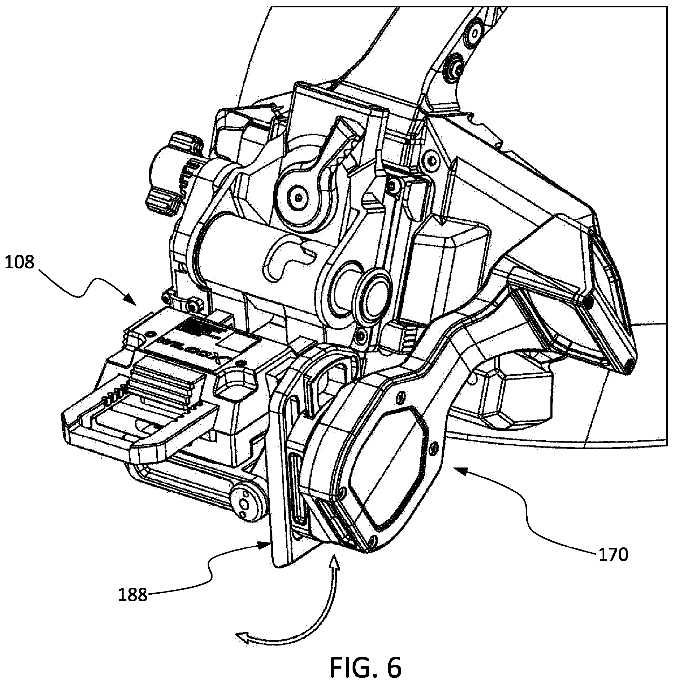

As best seen in FIG. 6, the pivot arm **188** is pivotable approximately 90 degrees in relation to the about the powered bridge base **192** about the pivot axis **220.** In the illustrated embodiments, spring elements **296** are captured within respective openings **300** in the powered bridge base **192.** The openings **300** each partially receive a detent member **304.** The detent members **304** resiliently engage one or more complementary openings or slots **308** formed in the facing surface of the hinge knuckle **204** on the pivot arm **188** when the pivot arm **188** is in the deployed position. The detent members **304** provide a force to overcome mechanism to secure the pivot arm **188** in the deployed position and allow the pivot arm **188** to be pivoted to the stowed position when a sufficient manual force is applied to rotate the pivot arm **188** about the pivot axis **220.**

Likewise, the detent members **304** resiliently engage one or more complementary openings or slots **310** formed in the corresponding facing surface of the pivot arm **188** when the pivot arm **188** is in the stowed position. The detent members **304** provide a force to overcome mechanism to secure the pivot arm **188** in the stowed position and allow the pivot arm **188** to be pivoted back to the deployed position when a sufficient manual force is applied to rotate the pivot arm **188** about the pivot axis **220.**

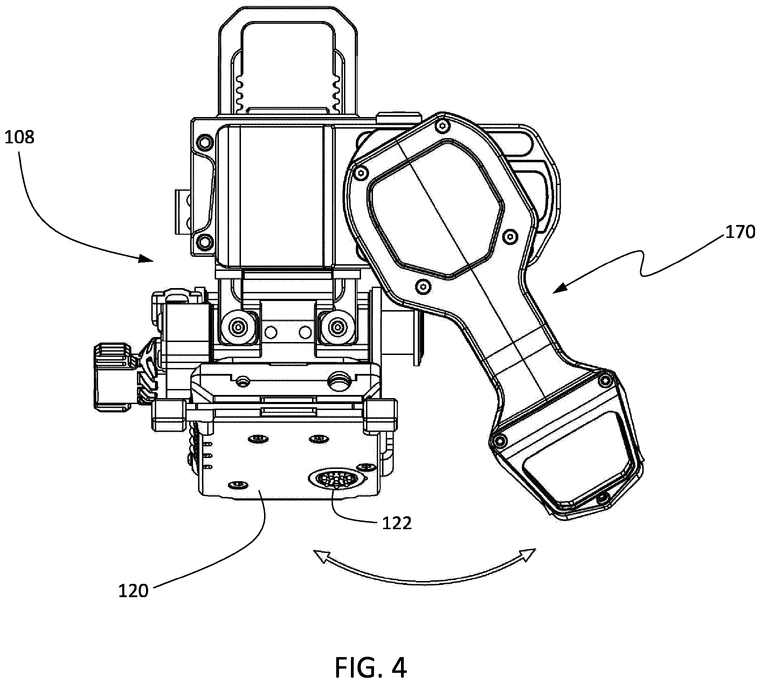

In operation, when the user wishes to stop using the HUD, the HUD assembly **170** is first pivoted about the vertical pivot axis **184,** away from the user's eye, as shown in FIG. 4. Next, the pivot arm **188** with the HUD assembly **170** still in the outward pivoted position is pivoted upward about the longitudinal axis **220.**

In certain embodiments, a switch may be provided to power off the HUD assembly **170** when the unit is in the stowed position to reduce power consumption. In certain embodiments, a magnet (not shown) is disposed on the HUD assembly **170** wherein moving the HUD assembly **170** to the stowed position moves the magnet into proximity with a sensor, such as a Hall effect sensor or a magnetic reed switch to automatically power-off the HUD assembly when the electronic device is in the stowed position.

The powered bridge assembly **190** includes an aperture **312.** A power and data contact circuit board **316** is disposed over the aperture **312.** The aperture may be bounded by an inset or shoulder **320** such that the circuit board **316** sits flush with the upper surface of the powered bridge base **192.** An internal power/data cable interface or connector **324** is disposed on the lower surface of the circuit board **316.** The connector **324,** in turn, is coupled to a complementary connector **328** on an internal data and power cable **330.**

A hot shoe insulator **332** is formed of an insulating material, such as a thermoset or thermoplastic resin, or other suitable dielectric material, and is disposed over the circuit board **316.** A plurality of apertures or vias **336** in the hot shoe insulator **332** receive a corresponding plurality of conductive pins **340** which electrically engage a corresponding plurality of contacts, e.g., contact pads **344,** on the circuit board **316.** In embodiments, the pins **340** are spring-loaded pins, e.g., pogo pins.

An upstanding boss **348** on the hot shoe insulator **332** receives a sealing ring or gasket **350** to prevent entry of moisture or other external contamination. A hot shoe frame **352** is secured over the hot shoe insulator **332** by threaded fasteners **356** which pass through clearance openings **360** in the hot shoe frame **352,** aligned clearance openings **364** in the hot shoe insulator **332** and threadably engage openings **368** in the powered bridge base **192.**

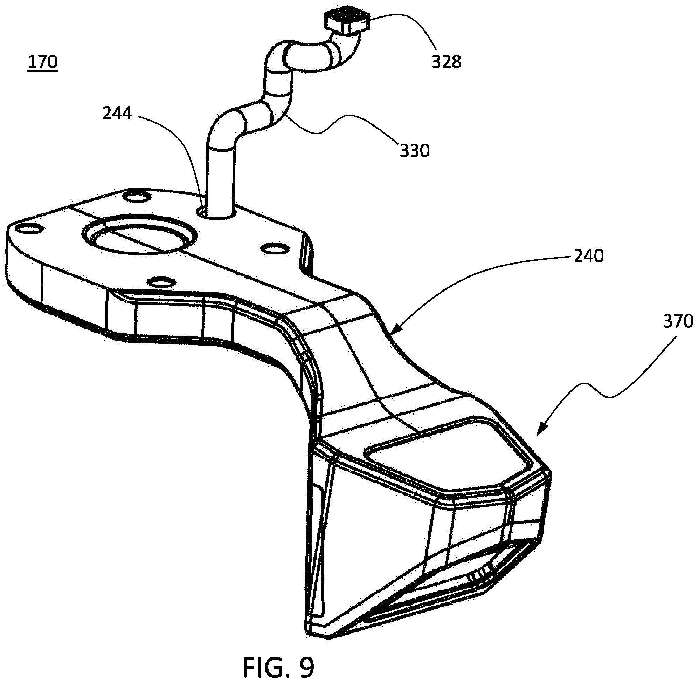

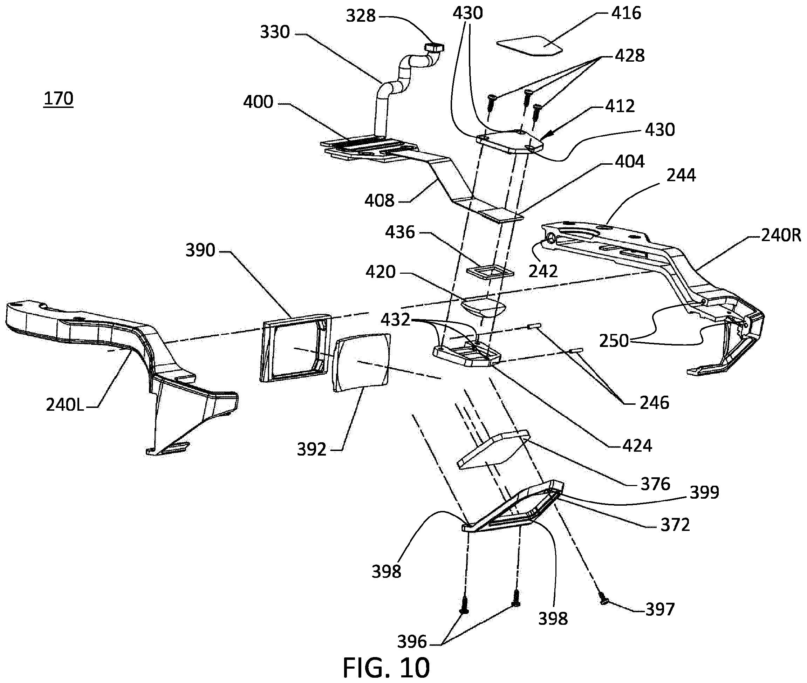

As best seen in FIGS. 9 and 10, the HUD assembly **170** includes a housing **240** comprising a left housing shell **240L** and a right housing shell **240R,** which may be formed of a molder polymer material. The left and right housing shells may be secured via a threaded fastener (not shown) passing through an opening **242** in the shell half **240R** and engaging an aligned opening (not shown) in the shell half **240L.** Alignment pins **246** engage openings **250** in the shells **240R, 240L.**

The distal end **176** of the HUD assembly **170** forms an ocular assembly **370.** The ocular assembly **370** includes a beam splitter frame **372** which carries a beam splitter **376.** The beam splitter **376** may be any suitable optical element capable of reflecting a portion of incident rays while allowing transvisualization therethrough, as would be understood by persons skilled in the art. The beam splitter frame **372** serves as the viewing aperture and the beam splitter **376** serves as the eyepiece, both of which are aligned with an optical centerline **380** which, during operation, is aligned with an optical axis **384** of the user's eye **388.**

The ocular assembly **370** further includes a combiner lens frame **390** receives a combiner lens **392** and defines an objective lens of the ocular assembly **370.** The beam splitter **376** lies in a plane which is inclined at a generally 45-degree angle in relation to the plane in which the combiner lens **392** lies. The beam splitter frame **372** acts as a bezel for the beam splitter **376** and is secured via threaded fasteners **396** which pass through clearance openings **398** in the frame **372** and threadably engage openings in the combiner frame **390.** A third threaded fastener **397** passes through a clearance opening **399** in the frame **372** and threadably engages an aligned opening in the housing **240.**

The internal data and power cable **330** passes through an opening **244** in the housing **240.** The proximal end of the internal data and power cable **330** is operably coupled to video processing electronics **400** which receives an input signal via the cable **330** which is representative of video information to be displayed on a display **404.** The video processing electronics **400** are disposed within the housing **240** at the proximal end **172** of the HUD assembly **170.** The video processing electronics **400** may be implemented on a printed circuit board (PCB) or integrated into a printed wiring assembly (PWA) populated with video signal processing components such as image enhancement, graphic or text overlay, video signal formatting, digital-to-analog conversion (DAC) circuitry, display driver circuitry, and the like.

A video output signal is output from the video processing electronics **400** to the display **404** via a flex circuit **408.** Alternatively, a ribbon cable may be used. The display may be any suitable display type including a light emitting diode (LED) display, organic light emitting diode (OLED) display, active matrix organic light-emitting diode (AMOLED) display, liquid crystal display (LCD), digital light processing (DLP) display, micro-electro-mechanical systems (MEMS) display, or the like. In embodiments, the display **404** is an OLED display.

In embodiments, the display **404** is in thermal communication with a heat sink **412** to manage and dissipate heat generated during operation of the display **404.** In embodiments, thermal compound is applied between the display and the heat sink **408.** In embodiments, a label **416,** e.g., an adhesive label, may be disposed on the exterior surface of the heat sink. The label **416** may contain, for example product information or identification, product branding, and the like, or may be configured to otherwise provide a desired finished appearance.

The field lens **420** is positioned adjacent the display **404.** The display **404** and the field lens **420** are disposed between the heat sink **412** and a display/field lens positioning frame **424.** Threaded fasteners **428** pass through clearance openings **430** in the heat sink **412** and threadably engage openings **432** in the display/field lens positioning frame **424.**

The field lens **420** focuses the image output from the display **404** onto the beam splitter **376.** The display **404** and field lens **420** lie in generally parallel planes which are inclined about 45 degrees with respect to the plane of the beam splitter **376** and about 90 degrees with respect to the plane of the combiner lens **392.**

In embodiments, a resilient focusing gasket **436** is disposed intermediate the display **404** and the field lens **420.** In certain embodiments, the focusing gasket **436** is formed of a resilient elastomeric material. In preferred embodiments, the focusing gasket **436** is formed of a closed cell foam material. The focusing gasket **436** seals against entry of moisture or other contamination. The focusing gasket **436** also provides a focus adjustment. By adjusting the 3 fasteners **328,** the degree of compression of the gasket **436** is adjusted to change the distance between the field lens **420** and the display **404,** which allows precise focusing of the image from the display **404** onto the beam splitter **376.**

For example, in certain embodiments, the nominal focal distance of the field lens 420 is approximately 0.032 inch. The focusing gasket **436** gasket has a thickness of 0.050 inch resiliently biases the display **404** away from away from the field lens **420.** The gasket **436** compresses as the fasteners **428** are tightened to achieve the desired focus, to thereby account for variations in focus which vary slightly from assembly to assembly.

In operation, an image generated by the display **404** is projected towards the beam splitter **376** through the field lens **420.** The beam splitter **376** reflects a portion of the rays from the display **404** towards the combiner lens **392.** The combiner lens **392,** in turn, reflects the portion of rays received from the beam splitter **376** along the optical path **380** towards the user's eye **388.** In this manner, the image from the display **404** is projected onto the user's field of view. Additionally, the combiner lens **392** and beam splitter **376,** being substantially transparent, also allow unaltered rays from the user's external environment to also pass through the through the ocular assembly **370,** such that the image from the display **404** is superimposed on the user's natural view through the ocular assembly **370.**

In the embodiment appearing in FIG. 1, the information displayed by the HUD assembly **170** comes from one or more devices associated with the helmet accessory mount platform **112** and is transmitted to the HUD assembly via the HMA **108** using the internal data and power cable **330.**

In the embodiment appearing in FIG. 2, an optional external data and power cable **331** is provided which allows external video data to be transferred to the video processing electronic **400** within the HUD assembly **170,** independent of the helmet accessory mount platform **112.** The cable **331** passes through an opening **245** in the housing **240.**

It will be recognized that the HUD assembly can display all manner of video information **170** to enhance situational awareness and provide critical data to the user. In certain embodiments, the video information displayed by the HUD assembly **170** includes information from an associated helmet accessory mount platform, such as the platform **112.** In certain embodiments, the video information displayed by the HUD assembly **170** includes navigation data, such as compass headings, GPS coordinates, waypoints and routes, and the like. In certain embodiments, the video information displayed by the HUD assembly **170** includes target information, such as target coordinates, range to target, target identification, and so forth. In certain embodiments, the video information displayed by the HUD assembly **170** includes weapon information, such as ammunition type, round count, weapon system status, barrel temperature, and so forth. In certain embodiments, the video information displayed by the HUD assembly **170** includes terrain information, such as elevation data, terrain contours, obstacle warnings, and so forth. In certain embodiments, the video information displayed by the HUD assembly **170** includes communication status, such as radio frequency and channel, incoming communication alerts, team communication status, and so forth. In certain embodiments, the video information displayed by the HUD assembly **170** includes team member information, such as GPS positions of team members, status updates on team members, and so forth. In certain embodiments, the video information displayed by the HUD assembly **170** includes weather data, such as local weather conditions, wind speed and direction, temperature and humidity, and so forth. In certain embodiments, the video information displayed by the HUD assembly **170** includes health and biometric information, such as user or team member vital signs, medical alerts or status, and so forth. In certain embodiments, the video information displayed by the HUD assembly **170** includes mission objective information, such as objective locations, mission updates, mission parameters, and so forth. In certain embodiments, the video information displayed by the HUD assembly **170** includes threat alerts, including nearby threats detected, incoming projectile warnings, enemy positions, and so forth. In certain embodiments, the video information displayed by the HUD assembly **170** includes logistics information, including inventory status, supply and equipment tracking, resource availability, and so forth. In certain embodiments, the video information displayed by the HUD assembly **170** includes identification friend or foe (IFF) information, including identification of friendly forces, status of nearby friendly units, and so forth. In certain embodiments, the video information displayed by the HUD assembly **170** includes tactical overlay information, such as grid coordinates, tactical map overlay, markings for strategic points, and so forth. In certain embodiments, the video information displayed by the HUD assembly **170** includes alerts and notifications, such as tactical alerts, mission updates, and so forth. In certain embodiments, the video information displayed by the HUD assembly **170** includes intelligence and reconnaissance information, such as intelligence updates, live video feeds from drones or reconnaissance assets, and so forth. In certain embodiments, the video information displayed by the HUD assembly **170** includes training simulation information, such as HUD overlays for training scenarios, simulations for mission planning and rehearsals, and so forth. In certain embodiments, the video information displayed by the HUD assembly **170** is dynamically adjusted in response to user head tracking data.

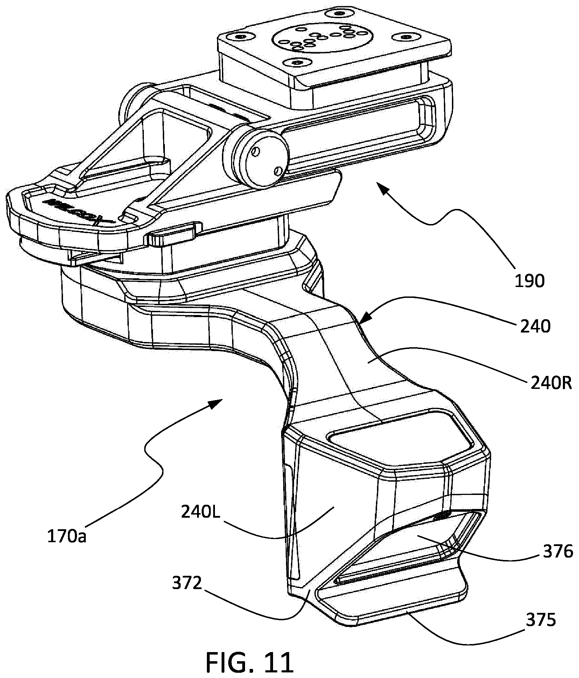

FIG. 11 illustrates an additional embodiment head up display assembly **170a** which may be used in place of the head up display assembly **170** as shown and described above by way of reference to FIGS. 1-10. The head up display assembly **170a** is coupled to a powered bridge assembly **190,** which may be as described above. The head up display assembly **170a** includes a projection **375** extending from beneath the beam splitter **376.** Otherwise, the above description of the head up display assembly **170** is equally applicable to the head up display assembly **170a.**

In the illustrated embodiment, the projection **375** extends from a lower portion of the beam splitter frame **372.** It will be recognized that other configurations are contemplated. For example, in certain embodiments, the projection is a separately formed member which is attached to the head up display assembly **170a.** In still further embodiments, the projection **375** is integral with another component of the head up display assembly **170a.** For example, in embodiments, the projection **375** is integrally formed with the housing **240.**

In operation, the projection **375** extends toward the user and acts as an antireflection shield or hood to prevent reflection of unwanted images from at least one direction. In the depicted embodiment the projection **375** is disposed beneath the beam splitter **376** to prevent reflections such as the user's feet, the floor, the ground, etc., that might otherwise be reflected off the surface of the beam splitter **376** to the user's eye and cause reflective distractions. The projection **375** is depicted as having a generally flat shelf-like or plate-like configuration. However, it will be recognized that other configurations are contemplated, including curvilinear structures that completely or partially surround the beam splitter **376.** The head up display **170a** may be substituted for the head up display assembly **170** as shown and described by way of FIGS. 1-10 and, except for the inclusion of the projection **375,** the description of FIGS. 1-10 applies equally to FIG. 11 and the remaining features and functions remain as described above.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A head up display apparatus, comprising:
a powered bridge assembly (190) configured for detachable coupling to a helmet mount assembly (108);
a bridge pivot arm assembly pivotably attached to the powered bridge assembly (190), the bridge pivot arm assembly having a bridge pivot arm (188) configured to pivot in relation to the powered bridge assembly (190) about a first pivot axis (220), the first pivot axis (220) extending in a direction which is generally horizontal and generally parallel to a line of sight of a user,
a head up display (HUD) assembly (170) attached to the bridge pivot arm assembly,
**characterised in that** the HUD assembly (170) comprises a HUD pivot arm having a HUD disposed at a distal end of the HUD pivot arm and a HUD pivot assembly disposed at a proximal end of the HUD pivot arm, the HUD pivot arm configured to pivot in relation to the bridge pivot arm (188) about a second pivot axis (184), the second pivot axis (184) extending in a generally vertical direction;
wherein pivoting movement of the bridge pivot arm (188) in relation to the powered bridge assembly (190) causes the HUD to move between a lowered position and a raised position along an arcuate path in a generally vertical plane; and
when the bridge pivot arm (188) is in the lowered position, pivoting movement of the HUD pivot arm in relation to the bridge pivot arm (188) causes the HUD to move between a viewing position and a laterally displaced position along an arcuate path in a generally horizontal plane.

2. The head up display apparatus of claim 1, wherein pivoting movement of the bridge pivot arm in relation to the powered bridge assembly and pivoting movement of the HUD pivot arm in relation to the bridge pivot arm are configured for one-handed operation thereby allowing the user to pivot the HUD between the lowered position and the raised position and between the viewing position and the laterally displaced position using one hand.

3. The head up display apparatus of claim 1 or claim 2, wherein the powered bridge assembly comprises:
a base receiving a first plurality of electrical contacts configured to electrically engage aligned contacts on the helmet mounting assembly and a power and data circuit board, the base pivotally coupled to the bridge pivot arm, the base and bridge pivot arm cooperating to define a pivot j oint; and
a detent mechanism comprising one or more spring elements engaging one or more detent members, the one or more detent members configured to resiliently engage one or more complementary openings formed on a facing surface of the pivot joint when the bridge pivot arm is in the lowered position, the detent mechanism configured to provide a force to overcome mechanism for securing the bridge pivot arm in the lowered position and for allowing the pivot arm to be pivoted to the raised position responsive to application of a sufficient force.

4. The head up display apparatus of claim 3, further comprising:
one or more tensioning washers disposed at the pivot joint to control friction and resistance during pivoting movement of the bridge pivot arm.

5. The head up display apparatus of claim 3 or claim 4, wherein the HUD assembly comprises a data and power cable comprising a plurality of conductors and an HUD electrical connector configured to electrically engage a bridge electrical connector disposed on the power and data circuit board.

6. The head up display apparatus of any of claims 3-5, further comprising:
a first sliding connector disposed on the bridge pivot arm and a second sliding connector complementary with the first sliding connector, the first and second sliding connectors configured to detachably couple the HUD assembly to the bridge pivot arm.

7. The head up display apparatus of claim 6, wherein the first sliding connector comprises a generally T-shaped projection and the second sliding connector comprises a generally T-shaped channel.

8. The head up display apparatus of claim 7, wherein the generally T-shaped projection includes a gap, and wherein the first sliding connector further comprises a spring-biased slide lock disposed in the gap, the slide lock engaging with the T-shaped channel to selectively lock the HUD assembly in place on the bridge pivot arm.

9. The head up display apparatus of any of claim 6-8, wherein the HUD pivot arm is pivotable with respect to the second sliding connector about the second pivot axis.

10. The head up display apparatus of claim 9, further comprising:
a pivot plate secured to an upward facing surface of the proximal end of the HUD pivot arm;
a pivot threaded retainer disposed intermediate the pivot plate and the upward facing surface of the proximal end of the HUD pivot arm;
a recess formed in a housing shell of the HUD assembly receiving the pivot threaded retainer;
a pivot lock screw passing through a clearance opening in the second sliding connector, a central opening in the pivot plate the opening, and threadably engaging the pivot threaded retainer.

11. The head up display apparatus of claim 10, further comprising:
a pivot stop pin is secured to a lower surface of the second sliding connector and running in an arcuate groove formed in an upper surface of the pivot plate, thereby limiting the degree of rotation of the HUD pivot arm with respect to the bridge pivot arm.

12. The head up display apparatus of any of the preceding claims, wherein the HUD assembly comprises an external data and power connector configured to transfer external video data to the HUD assembly.

13. The head up display apparatus of any of the preceding claims, wherein the HUD assembly further comprises video processing electronics configured to receive an input signal representative of video information and a human viewable display.

14. The head up display apparatus of claim 13, wherein the video processing electronics comprise one or more video signal processing components selected from the group consisting of image enhancement, graphic overlay, text overlay, video signal formatting, digital-to-analog conversion (DAC) circuitry, and display driver circuitry.

15. The head up display apparatus of claim 13 or claim 14, wherein the human viewable display is selected from the group consisting of a light emitting diode (LED) display, an organic light emitting diode (OLED) display, an active matrix organic light-emitting diode (AMOLED) display, a liquid crystal display (LCD), a digital light processing (DLP) display, and a micro-electro-mechanical systems (MEMS) display.

16. The head up display apparatus of any of claims 13-15, further comprising a heat sink in thermal communication with the human viewable display.

17. The head up display apparatus of any of claims 13-16, further comprising:
a beam splitter;
a combiner lens; and
a field lens positioned adjacent the human viewable display and configured to focus an image output from the display onto a beam splitter;
wherein the human viewable display and field lens lie in generally parallel planes which are inclined about 45 degrees with respect to a plane of the beam splitter and about 90 degrees with respect to a plane of the combiner lens.

18. The head up display apparatus of claim 17, further comprising:
a resilient focusing gasket disposed intermediate the human viewable display and the field lens, the focusing gasket being formed of a resilient material, wherein a degree of compression of the focusing gasket is adjustable to change a distance between the field lens and the human viewable display.

19. The head up display apparatus of claim 17 or claim 18, further wherein:
the human viewable display is configured to project an image towards the beam splitter through the field lens;
the beam splitter is configured to reflect a portion of rays from the human viewable display towards the combiner lens;
the combiner lens is configured to reflect the portion of rays received from the beam splitter along an optical path toward an eye of the user, thereby projecting the image from the human viewable display onto the user's field of view; and
the combiner lens and beam splitter are further configured to allow unaltered rays from the user's external environment to pass therethrough, whereby the image from the human viewable display is superimposed on a natural view of the user through the HUD assembly.

20. The head up display apparatus of claim 19, further comprising:
a projection extending from the HUD assembly and forming a hood configured to block unwanted reflections off the beamsplitter from at least one direction.

## Patentansprüche

1. Head-up-Display-Einrichtung, umfassend:
eine angetriebene Brückenbaugruppe (190), die zur lösbaren Kopplung an eine Helmbefestigungsbaugruppe (108) ausgelegt ist;
eine Brückenschwenkarm-Baugruppe, die schwenkbar an der angetriebenen Brückenbaugruppe (190) angebracht ist, wobei die Brückenschwenkarm-Baugruppe einen Brückenschwenkarm (188) aufweist, der zum Schwenken in Bezug auf die angetriebene Brückenbaugruppe (190) um eine erste Schwenkachse (220) ausgelegt ist, wobei sich die erste Schwenkachse (220) in einer Richtung erstreckt, die im Allgemeinen horizontal und im Allgemeinen parallel zu einer Sichtlinie eines Benutzers ist,
eine Head-up-Display-(HUD)-Baugruppe (170), die an der Brückenschwenkarm-Baugruppe angebracht ist,
**dadurch gekennzeichnet, dass** die HUD-Baugruppe (170) einen HUD-Schwenkarm umfasst, der ein HUD aufweist, das an einem distalen Ende des HUD-Schwenkarms angeordnet ist, und eine HUD-Schwenkbaugruppe aufweist, die an einem proximalen Ende des HUD-Schwenkarms angeordnet ist, wobei der HUD-Schwenkarm zum Schwenken in Bezug auf den Brückenschwenkarm (188) um eine zweite Schwenkachse (184) ausgelegt ist, wobei sich die zweite Schwenkachse (184) in einer im Allgemeinen vertikalen Richtung erstreckt;
wobei Schwenkbewegung des Brückenschwenkarms (188) in Bezug auf die angetriebene Brückenbaugruppe (190) bewirkt, dass sich das HUD zwischen einer abgesenkten Stellung und einer angehobenen Stellung entlang eines bogenförmigen Wegs in einer im Allgemeinen vertikalen Ebene bewegt; und
wenn sich der Brückenschwenkarm (188) in der abgesenkten Stellung befindet, Schwenkbewegung des HUD-Schwenkarms in Bezug auf den Brückenschwenkarm (188) bewirkt, dass sich das HUD zwischen einer Betrachtungsstellung und einer seitlich versetzten Stellung entlang eines bogenförmigen Wegs in einer im Allgemeinen horizontalen Ebene bewegt.

2. Head-up-Display-Einrichtung nach Anspruch 1, wobei Schwenkbewegung des Brückenschwenkarms in Bezug auf die angetriebene Brückenbaugruppe und Schwenkbewegung des HUD-Schwenkarms in Bezug auf den Brückenschwenkarm zur Einhandbedienung ausgelegt sind, wodurch es dem Benutzer ermöglicht wird, das HUD zwischen der abgesenkten Stellung und der angehobenen Stellung und zwischen der Betrachtungsstellung und der seitlich versetzten Stellung mit einer Hand zu schwenken.

3. Head-up-Display-Einrichtung nach Anspruch 1 oder Anspruch 2, wobei die angetriebene Brückenbaugruppe umfasst:
eine Basis, die eine erste Vielzahl von elektrischen Kontakten aufnimmt, die zum elektrischen Eingriff mit ausgerichteten Kontakten an der Helmmontagebaugruppe ausgelegt sind, und eine Leistungs- und Datenleiterplatte, wobei die Basis schwenkbar mit dem Brückenschwenkarm gekoppelt ist, wobei die Basis und der Brückenschwenkarm zusammenwirken, um ein Schwenkgelenk zu bilden; und
einen Rastmechanismus, der ein oder mehrere Federelemente umfasst, die mit einem oder mehreren Rastgliedern in Eingriff stehen, wobei das eine oder die mehreren Rastglieder ausgelegt sind, um federnd mit einer oder mehreren komplementären Öffnungen in Eingriff zu treten, die in einer Gegenfläche des Schwenkgelenks ausgebildet sind, wenn sich der Brückenschwenkarm in der abgesenkten Stellung befindet, wobei der Rastmechanismus ausgelegt ist, um einen Überwindungskraft-Mechanismus zum Sichern des Brückenschwenkarms in der abgesenkten Stellung und zum Ermöglichen, dass der Schwenkarm als Reaktion auf Aufbringung einer ausreichenden Kraft in die angehobene Stellung geschwenkt wird, bereitzustellen.

4. Head-up-Display-Einrichtung nach Anspruch 3, ferner umfassend:
eine oder mehrere Spannscheiben, die an dem Schwenkgelenk angeordnet sind, um Reibung und Widerstand während der Schwenkbewegung des Brückenschwenkarms zu steuern.

5. Head-up-Display-Einrichtung nach Anspruch 3 oder Anspruch 4, wobei die HUD-Baugruppe ein Daten- und Leistungskabel, das eine Vielzahl von Leitern umfasst, und einen elektrischen HUD-Anschluss umfasst, der zum elektrischen Eingriff mit einem elektrischen Brückenanschluss ausgelegt ist, der auf der Leistungs- und Datenleiterplatte angeordnet ist.

6. Head-up-Display-Einrichtung nach einem der Ansprüche 3 bis 5, ferner umfassend:
einen ersten Gleitverbinder, der auf dem Brückenschwenkarm angeordnet ist, und einen zweiten Gleitverbinder, der komplementär mit dem ersten Gleitverbinder ist, wobei der erste und der zweite Gleitverbinder ausgelegt sind, um die HUD-Baugruppe lösbar an den Brückenschwenkarm zu koppeln.

7. Head-up-Display-Einrichtung nach Anspruch 6, wobei der erste Gleitverbinder einen im Allgemeinen T-förmigen Vorsprung umfasst und der zweite Gleitverbinder eine im Allgemeinen T-förmige Nut umfasst.

8. Head-up-Display-Einrichtung nach Anspruch 7, wobei der im Allgemeinen T-förmige Vorsprung einen Spalt aufweist, und wobei der erste Gleitverbinder ferner eine federbelastete Schieberarretierung umfasst, die in dem Spalt angeordnet ist, wobei die Schieberarretierung mit der T-förmigen Nut in Eingriff steht, um die HUD-Baugruppe selektiv an dem Brückenschwenkarm in Position zu arretieren.

9. Head-up-Display-Einrichtung nach einem der Ansprüche 6 bis 8, wobei der HUD-Schwenkarm in Bezug auf den zweiten Gleitverbinder um die zweite Schwenkachse schwenkbar ist.

10. Head-up-Display-Einrichtung nach Anspruch 9, ferner umfassend:
eine Schwenkplatte, die an einer nach oben weisenden Fläche des proximalen Endes des HUD-Schwenkarms befestigt ist;
einen Schwenkgewindehalter, der zwischen der Schwenkplatte und der nach oben weisenden Fläche des proximalen Endes des HUD-Schwenkarms angeordnet ist;
eine Vertiefung, die in einer Gehäuseschale der HUD-Baugruppe ausgebildet ist, die den Schwenkgewindehalter aufnimmt;
eine Schwenkarretierungsschraube, die durch eine Durchgangsöffnung in dem zweiten Gleitverbinder, eine zentrale Öffnung in der Schwenkplatte, die Öffnung, hindurchgeht und schraubbar mit dem Schwenkgewindehalter in Eingriff steht.

11. Head-up-Display-Einrichtung nach Anspruch 10, ferner umfassend:
einen Schwenkanschlagstift, der an einer unteren Fläche des zweiten Gleitverbinders befestigt ist und in einer bogenförmigen Nut verläuft, die in einer oberen Fläche der Schwenkplatte ausgebildet ist, wodurch der Drehwinkel des HUD-Schwenkarms in Bezug auf den Brückenschwenkarm begrenzt wird.

12. Head-up-Display-Einrichtung nach einem der vorhergehenden Ansprüche, wobei die HUD-Baugruppe einen externen Daten- und Leistungsanschluss umfasst, der zum Übertragen externer Videodaten an die HUD-Baugruppe ausgelegt ist.

13. Head-up-Display-Einrichtung nach einem der vorhergehenden Ansprüche, wobei die HUD-Baugruppe ferner eine Videoverarbeitungselektronik, die zum Empfangen eines Eingangssignals ausgelegt ist, das Videoinformationen repräsentiert, und eine visuell wahrnehmbare Anzeige umfasst.

14. Head-up-Display-Einrichtung nach Anspruch 13, wobei die Videoverarbeitungselektronik eine oder mehrere Videosignalverarbeitungskomponenten umfasst, die aus der Gruppe ausgewählt sind, die aus Bildverbesserung, Grafiküberlagerung, Textüberlagerung, Videosignalformatierung, Digital-Analog-Wandlungs-(DAC)-Schaltung und Anzeigetreiberschaltung besteht.

15. Head-up-Display-Einrichtung nach Anspruch 13 oder Anspruch 14, wobei die visuell wahrnehmbare Anzeige aus der Gruppe ausgewählt ist, die aus einer Leuchtdioden-(LED)-Anzeige, einer organischen Leuchtdioden-(OLED)-Anzeige, einer Aktivmatrix-organischen-Leuchtdioden-(AMOLED)-Anzeige, einer Flüssigkristallanzeige (LCD), einer Anzeige mit digitaler Lichtverarbeitung (DLP) und einer Anzeige mit mikroelektromechanischen Systemen (MEMS) besteht.

16. Head-up-Display-Einrichtung nach einem der Ansprüche 13 bis 15, ferner umfassend einen Kühlkörper in thermischer Verbindung mit der visuell wahrnehmbaren Anzeige.

17. Head-up-Display-Einrichtung nach einem der Ansprüche 13 bis 16, ferner umfassend:
einen Strahlteiler;
eine Kombinationslinse; und
eine Feldlinse, die benachbart zu der visuell wahrnehmbaren Anzeige positioniert und dazu ausgelegt ist, eine Bildausgabe von der Anzeige auf einen Strahlteiler zu fokussieren;
wobei die visuell wahrnehmbare Anzeige und die Feldlinse in im Allgemeinen parallelen Ebenen liegen, die etwa 45 Grad in Bezug auf eine Ebene des Strahlteilers und etwa 90 Grad in Bezug auf eine Ebene der Kombinationslinse geneigt sind.

18. Head-up-Display-Einrichtung nach Anspruch 17, ferner umfassend:
eine elastische Fokussierdichtung, die zwischen der visuell wahrnehmbaren Anzeige und der Feldlinse angeordnet ist, wobei die Fokussierdichtung aus einem elastischen Material gebildet ist, wobei ein Kompressionsgrad der Fokussierdichtung einstellbar ist, um einen Abstand zwischen der Feldlinse und der visuell wahrnehmbaren Anzeige zu ändern.

19. Head-up-Display-Einrichtung nach Anspruch 17 oder Anspruch 18, ferner wobei:
die visuell wahrnehmbare Anzeige dazu ausgelegt ist, ein Bild durch die Feldlinse zum Strahlteiler zu projizieren;
der Strahlteiler dazu ausgelegt ist, einen Anteil von Strahlen von der visuell wahrnehmbaren Anzeige zur Kombinationslinse zu reflektieren;
die Kombinationslinse dazu ausgelegt ist, den Anteil der von dem Strahlteiler empfangenen Strahlen entlang eines optischen Pfads zu einem Auge des Benutzers zu reflektieren, wodurch das Bild von der visuell wahrnehmbaren Anzeige auf das Sichtfeld des Benutzers projiziert wird; und
die Kombinationslinse und der Strahlteiler ferner dazu ausgelegt sind, unveränderte Strahlen aus der äußeren Umgebung des Benutzers hindurchtreten zu lassen, wodurch das Bild von der visuell wahrnehmbaren Anzeige auf eine natürliche Sicht des Benutzers durch die HUD-Baugruppe überlagert wird.

20. Head-up-Display-Einrichtung nach Anspruch 19, ferner umfassend:
einen Vorsprung, der sich von der HUD-Baugruppe erstreckt und eine Blende bildet, die dazu ausgelegt ist, unerwünschte Reflexionen von dem Strahlteiler aus mindestens einer Richtung zu blockieren.

## Revendications

1. Appareil d'affichage tête haute, comprenant :
un ensemble de pont motorisé (190) configuré pour être couplé de manière amovible à un ensemble de fixation de casque (108) ;
un ensemble de bras pivotant de pont fixé de manière pivotante à l'ensemble de pont motorisé (190), l'ensemble de bras pivotant de pont ayant un bras pivotant de pont (188) configuré pour pivoter par rapport à l'ensemble de pont motorisé (190) autour d'un premier axe de pivotement (220), le premier axe de pivotement (220) s'étendant dans une direction généralement horizontale et généralement parallèle à la ligne de visée d'un utilisateur,
un ensemble d'affichage tête haute (HUD) (170) fixé à l'ensemble de bras pivotant de pont,
**caractérisé en ce que** l'ensemble HUD (170) comprend un bras pivotant de l'HUD ayant un HUD disposé à une extrémité distale du bras pivotant de l'HUD et un ensemble de pivotement d'HUD disposé à une extrémité proximale du bras pivotant de l'HUD, le bras pivotant de l'HUD étant configuré pour pivoter par rapport au bras pivotant de pont (188) autour d'un second axe de pivotement (184), le second axe de pivotement (184) s'étendant dans une direction généralement verticale ;
dans lequel le mouvement de pivotement du bras pivotant de pont (188) par rapport à l'ensemble de pont motorisé (190) provoque le déplacement de l'HUD entre une position abaissée et une position relevée le long d'une trajectoire arquée dans un plan généralement vertical ; et
lorsque le bras pivotant de pont (188) est en position abaissée, le mouvement de pivotement du bras pivotant de l'HUD par rapport au bras pivotant de pont (188) provoque le déplacement de l'HUD entre une position de vision et une position latéralement déplacée le long d'un chemin arqué dans un plan généralement horizontal.

2. Appareil d'affichage tête haute selon la revendication 1, dans lequel le mouvement de pivotement du bras pivotant de pont par rapport à l'ensemble de pont motorisé et le mouvement de pivotement du bras pivotant de l'HUD par rapport au bras pivotant de pont sont configurés pour une utilisation à une main, permettant ainsi à l'utilisateur de faire pivoter l'HUD entre la position abaissée et la position relevée et entre la position de vision et la position latéralement déplacée à l'aide d'une seule main.

3. Appareil d'affichage tête haute selon la revendication 1 ou la revendication 2, dans lequel l'ensemble de pont motorisé comprend :
une base recevant une première pluralité de contacts électriques configurés pour entrer en contact électriquement avec des contacts alignés sur l'ensemble de fixation de casque et une carte de circuit imprimé d'alimentation et de données, la base étant couplée de manière pivotante au bras pivotant de pont, la base et le bras pivotant de pont coopérant pour définir une articulation pivotante ; et
un mécanisme de détente comprenant un ou plusieurs éléments à ressort entrant en contact avec un ou plusieurs éléments de détente, les un ou plusieurs éléments de détente étant configurés pour entrer en contact de manière élastique avec une ou plusieurs ouvertures complémentaires formées sur une surface de face de l'articulation pivotante lorsque le bras pivotant de pont est en position abaissée, le mécanisme de détente étant configuré pour fournir une force permettant de surmonter le mécanisme de fixation du bras pivotant de pont en position abaissée et pour permettre au bras pivotant d'être pivoté en position relevée en réponse à l'application d'une force suffisante.

4. Appareil d'affichage tête haute selon la revendication 3, comprenant en outre :
une ou plusieurs rondelles de tension disposées au niveau de l'articulation pivotante pour contrôler le frottement et la résistance lors du mouvement de pivotement du bras pivotant de pont.

5. Appareil d'affichage tête haute selon la revendication 3 ou la revendication 4, dans lequel l'ensemble HUD comprend un câble de données et d'alimentation comprenant une pluralité de conducteurs et un connecteur électrique HUD configuré pour entrer en contact électriquement avec un connecteur électrique de pont disposé sur la carte de circuit imprimé d'alimentation et de données.

6. Appareil d'affichage tête haute selon l'une quelconque des revendications 3 à 5, comprenant en outre :
un premier connecteur coulissant disposé sur le bras pivotant de pont et un second connecteur coulissant complémentaire au premier connecteur coulissant, les premier et second connecteurs coulissants étant configurés pour coupler de manière amovible l'ensemble HUD au bras pivotant de pont.

7. Appareil d'affichage tête haute selon la revendication 6, dans lequel le premier connecteur coulissant comprend une projection généralement en forme de T et le second connecteur coulissant comprend un canal généralement en forme de T.

8. Appareil d'affichage tête haute selon la revendication 7, dans lequel la projection généralement en forme de T comporte un espace, et dans lequel le premier connecteur coulissant comprend en outre un verrou coulissant à ressort disposé dans l'espace, le verrou coulissant entrant en contact avec le canal en forme de T pour verrouiller sélectivement l'ensemble HUD en place sur le bras pivotant de pont.

9. Appareil d'affichage tête haute selon l'une quelconque des revendications 6 à 8, dans lequel le bras pivotant de l'HUD pivote par rapport au second connecteur coulissant autour du second axe de pivotement.

10. Appareil d'affichage tête haute selon la revendication 9, comprenant en outre :
une plaque de pivotement fixée à une surface orientée vers le haut de l'extrémité proximale du bras pivotant de l'HUD ;
un dispositif de retenue fileté de pivot disposé entre la plaque de pivotement et la surface orientée vers le haut de l'extrémité proximale du bras pivotant de l'HUD ;
un logement formé dans la coque du boîtier de l'ensemble HUD recevant le dispositif de retenue fileté de pivot ;
une vis de verrouillage de pivot passant par une ouverture de dégagement dans le second connecteur coulissant, une ouverture centrale dans la plaque de pivotement, et entrant en contact par filetage avec le dispositif de retenue fileté de pivot.

11. Appareil d'affichage tête haute selon la revendication 10, comprenant en outre :
un pion d'arrêt de pivotement est fixé à une surface inférieure du second connecteur coulissant et se déplace dans une rainure arquée formée dans une surface supérieure de la plaque de pivotement, limitant ainsi le degré de rotation du bras pivotant de l'HUD par rapport au bras pivotant de pont.

12. Appareil d'affichage tête haute selon l'une quelconque des revendications précédentes, dans lequel l'ensemble HUD comprend un connecteur externe d'alimentation et de données configuré pour transférer des données vidéo externes à l'ensemble HUD.

13. Appareil d'affichage tête haute selon l'une quelconque des revendications précédentes, dans lequel l'ensemble HUD comprend en outre une électronique de traitement vidéo configurée pour recevoir un signal d'entrée représentatif d'informations vidéo et un affichage visible par l'homme.

14. Appareil d'affichage tête haute selon la revendication 13, dans lequel l'électronique de traitement vidéo comprend un ou plusieurs composants de traitement de signal vidéo sélectionnés parmi le groupe constitué de l'amélioration de l'image, de la superposition graphique, de la superposition de texte, du formatage de signal vidéo, des circuits de conversion numérique-analogique (DAC) et des circuits de commande d'affichage.

15. Appareil d'affichage tête haute selon la revendication 13 ou la revendication 14, dans lequel l'affichage visible par l'homme est sélectionné parmi le groupe constitué d'un écran à diodes électroluminescentes (LED), d'un écran à diodes électroluminescentes organiques (OLED), d'un écran à diodes électroluminescentes organiques à matrice active (AMOLED), d'un écran à cristaux liquides (LCD), d'un écran à traitement numérique de la lumière (DLP) et d'un écran à systèmes micro-électro-mécaniques (MEMS).

16. Appareil d'affichage tête haute selon l'une quelconque des revendications 13 à 15, comprenant en outre un dissipateur thermique en communication thermique avec l'affichage visible par l'homme.

17. Appareil d'affichage tête haute selon l'une quelconque des revendications 13 à 16, comprenant en outre :
un séparateur de faisceau ;
une lentille combinatrice ; et
une lentille de champ positionnée à côté de l'affichage visible par l'homme et configurée pour focaliser une image de sortie de l'affichage sur un séparateur de faisceau ;
dans lequel l'affichage visible par l'homme et la lentille de champ se trouvent dans des plans généralement parallèles inclinés d'environ 45 degrés par rapport à un plan du séparateur de faisceau et d'environ 90 degrés par rapport à un plan de la lentille combinatrice.

18. Appareil d'affichage tête haute selon la revendication 17, comprenant en outre :
un joint de mise au point élastique disposé entre l'affichage visible par l'homme et la lentille de champ, le joint de mise au point étant formé d'un matériau élastique, dans lequel un degré de compression du joint de mise au point est réglable pour modifier une distance entre la lentille de champ et l'affichage visible par l'homme.

19. Appareil d'affichage tête haute selon la revendication 17 ou la revendication 18, dans lequel en outre :
l'affichage visible par l'homme est configuré pour projeter une image vers le séparateur de faisceau à travers la lentille de champ ;
le séparateur de faisceau est configuré pour réfléchir une partie des rayons provenant de l'affichage visible par l'homme vers la lentille combinatrice ;
la lentille combinatrice est configurée pour réfléchir la partie des rayons reçus du séparateur de faisceau le long d'un trajet optique vers l'œil de l'utilisateur, projetant ainsi l'image de l'affichage visible par l'homme dans le champ de vision de l'utilisateur ; et
la lentille combinatrice et le séparateur de faisceau sont en outre configurés pour permettre aux rayons non altérés provenant de l'environnement extérieur de l'utilisateur de les traverser, moyennant quoi l'image de l'affichage visible par l'homme est superposée à une vue naturelle de l'utilisateur à travers l'ensemble HUD.

20. Appareil d'affichage tête haute selon la revendication 19, comprenant en outre :
une projection s'étendant depuis l'ensemble HUD et formant un capot configuré pour bloquer les réflexions indésirables du séparateur de faisceau provenant d'au moins une direction.
